# EUROPEAN PATENT SPECIFICATION

(11) **EP 0 493 514 B1**
(45) Date of publication and mention of the grant of the patent: **21.07.1993**
(21) Application number: 90915141.7
(22) Date of filing: 26.09.1990
(51) Int. Cl.: B62D 27/02, B29C 65/54

(54) **METHOD AND FIXING FOR JOINING BODY MODULES**
VERFAHREN UND BEFESTIGUNGSWEISE ZUR VERBINDUNG VON KAROSSERIETEILEN
METHODE POUR JOINDRE DES MODULES DE CARROSSERIE

(30) Priority: 27.09.1989 DE 3932196
(43) Date of publication of application: 08.07.1992
(73) Proprietor: FORD FRANCE S. A., 92506 Rueil-Malmaison Cédex (FR); FORD MOTOR COMPANY LIMITED, Brentwood, Essex CM13 3BW (GB); FORD-WERKE AKTIENGESELLSCHAFT, 50725 Köln (DE)
(72) Inventor: VOGT, Hans, D-5063 Overath (DE); HUERTEN, Oskar, D-5000 Koeln 30 (DE); UFRECHT, Martin, D-5203 Much (DE); STEIB, Erhard, D-5200 Siegburg 1 (DE)
(74) Representative: Messulam, Alec Moses
(86) International application number: GB9001475
(87) International publication number: WO9104900

(56) References cited:
- DE-A- 3 322 198
- DE-A- 3 340 634
- DE-C- 3 807 703
- FR-A- 2 538 469

## Description

### Field of the invention

The invention relates to a method and a fixing for joining body modules, in particular plastics body modules of a motor vehicle.

### Background of the invention

It is known from EP-A-0 180 554 that different variants of a vehicle can be manufactured by a modular technique. A frame is manufactured, which is common to the variants, and different modules are attached to the frame to form the different variants, for example a hatchback or an estate car version of the same vehicle.

It is also known that such modules can be manufactured from plastics material and joined to one another by means of an adhesive. Such adhesive joints with plastics compounds, which are designed to be permanently elastic to avoid noise generation and the like, necessitate suitable fixing of the body modules to be joined together, during the curing time of this plastics compound.

### Description of the known prior art

A fixing for fitting a vehicle door to a body part is known from DE-C-3 340 634, in which a solid plug provided on one component is received with clearance in a socket mounted in the other component. The space between the plug and the socket is subsequently filled with a relatively fast curing plastics compound which is injected into the cavity under pressure from the end of the socket opposite to the end from which the plug is introduced into the socket.

There are two disadvantages with the above proposal. First, access is required to both ends of the socket to allow the plug to be introduced from one end and the curable plastics material to be injected from the other. Second, if a module has several such plug and socket fixings along the adhesive joint, it is difficult to manoeuvre the modules to locate all the plugs at the same time within theirs respective sockets and this difficulty is compounded by the fact that there will inevitably be tolerance errors in the location of the plugs and sockets on their respective modules.

DE-C-2 602 433 described the securing of a wall mounting plug in a wall to enable a screw to be fixed to the wall. The plug is placed in a hole pre-drilled into the wall and a curable plastics material is injected through the plug into the gap between the plug and the wall. In this way, the plug is held firmly in the wall and one does not rely on the expansion of the plug, which occurs when a screw is driven into the plug, to grip the wall.

### Object of the invention

The invention seeks to provide a method and a fixing which enable plastics body modules of motor vehicles to be joined together more simply and in which it is sufficient to have access to only one side of the modules which are to be joined.

### Summary of the invention

According to one aspect of the invention, there is provided a method of joining two components, such as plastics body modules of a motor vehicle, characterised by the steps of providing inserts recessed into the mating surfaces between the two components, the inserts being opposite one another when the components are in the position in which they are to be joined, there being in each pair of facing inserts a first insert having the form of a socket open at only one end and a second insert having the form of a sleeve open at both ends, holding the components together in the position in which they are to be joined, inserting into each pair of aligned inserts a hollow plug which is received with clearance in the two inserts, and injecting a curable plastics material through the hollow plug into the space between the plug and the two inserts, the plastics material being injected from the same side of the modules as the plug is introduced into the aligned inserts.

Because there are no protrusions from either of the modules to be joined to one another, the latter can readily be position relative to one another, if necessary after the application of a permanently elastic' jointing compound. The insertion of the plugs and the injection of the plastics material into the inserts can be carried out in a manner corresponding to tack welding of conventional sheet metal body parts.

According to a second aspect of the invention, there is provided a fixing for joining two components, such as plastics body modules of a motor vehicle, characterised by two inserts to be arranged opposite one another in the two components along the mating surface between the two components, a first insert having the form of a socket open at only one end and the second insert having the form of a sleeve open at both ends, and a hollow plug having an inner end capable of being received with clearance in the two inserts, the outer end of the hollow plug being adapted for connection to a plastics material injection unit to enable a curable plastics material to be injected through the hollow plug into the space between the plug and the two inserts.

Because here is clearance between the plugs and each of the aligned inserts, a substantial degree of misalignment between the inserts in each pair can be tolerated without impairing the insertion of the plugs and the injection of the fast curing plastics material.

By suitably shaping of the free end of the hollow plug to form a tight fit with an injection unit, the hollow plug can be used directly as an injection nozzle which allows rapid and deep penetration of the plastics material into the inserts and their complete filling.

If the walls of the inserts are provided with annular grooves, thread-like grooves or similar keying formations, not only is the common surface between socket and plastics material increased for better adhesion, but a positive keying is also produced.

Advantageously, the hollow plug may also be provided with annular grooves, thread-type grooves or transverse openings, to improve the adhesion of the plastics material and its distribution in the inserts.

Conveniently, the inserts may be formed as tubular inserts of metal or plastics material set into into the plastics body modules. In this case, they can be constructed in a desirable manner without the need for cores in the plastics body modules.

If an annular seal is arranged in the region between the inserts, undesirable escape of the curable plastics material can be avoided.

The curable plastics compound may suitably consist of a reaction plastics material (a multi-component thermosetting plastics material) which hardens in a load-bearing manner after a predetermined short period of time, or can consist of a fusible plastics material (thermoplastic material) which solidifies in a load-bearing manner after a predetermined short period of time.

### Brief description of the drawings

The invention will now be described further, by way of example, with reference to the accompanying drawings, in which:
Figure 1 shows a partial section through a joint between a plastics roof module and a plastics side wall module at the moment of injection of the curable plastics material,
Figure 2 shows a similar joint to Figure 1, at a different position and without introduced plastics jointing compound, on completion of injection of the curable plastics material,
Figure 3 shows an exploded view of a joint between a plastics floor pan module and the door threshold region of a plastics side wall module with the necessary individual parts prior to assembly, and
Figure 4 shows a partial section through the joint between the plastics floor pan module and the door threshold region of the plastics side wall module.

### Detailed description of the preferred embodiments

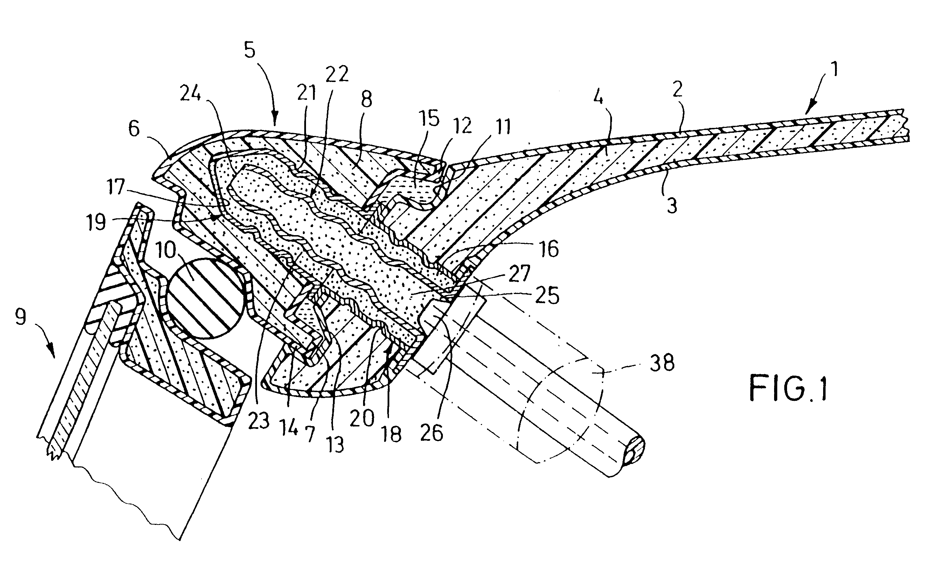

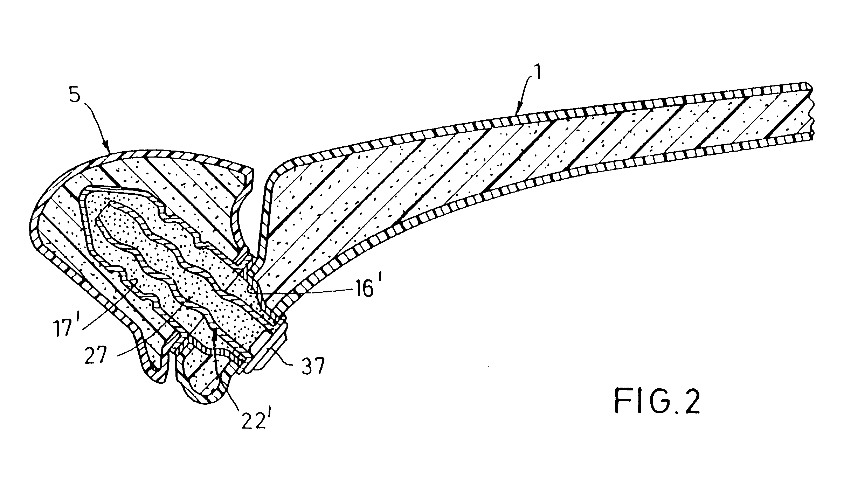

In the joint between two plastics body modules, shown in Figures 1 and 2, a plastics roof module 1 is constructed as a sandwich component with an external surface layer 2, an internal surface layer 3 and a filling core 4.

A plastics side wall module 5 is similarly constructed as a sandwich component with an external surface layer 6, an internal surface layer 7 and a core layer 8.

A vehicle door 9, also designed as a plastics component, co-operates with the plastics side wall module 5 in the usual way via a seal 10.

The two plastics body modules, the roof module 1 and the side wall module 5, have overlapping 11 and 12 as well as 13 and 14 into which a permanently elastic plastics joining compound 15 requiring a relatively long curing time is introduced.

At strategic points in the roof module 1 as well as in the side wall module 5 there are provided plug and socket fixings. The sockets of the fixings are formed in two initially separate parts constituted by inserts which are arranged in the plastics modules. In particular, inserts 18 are formed in the roof module 1 which have through bores defining cavities 16 open at both ends and inserts 19 are formed in the side wall module 5 which define cavities 17 open at only one end.

In the embodiment illustrated in Figure 1, the inserts 18 and 19 are additionally formed with annular or thread-like grooves 20 and 21. The inserts 18 and 19 can be prefabricated from either metal and plastics material and can be integrally set into the plastics body modules at the strategic points without the need to resort to pull cores in order to prepare the cavities.

A hollow plug 22 with an undulating outer contour 23, an open tip 24 at its inner end and an open outer end 25, which is preferably constructed such that it can be loaded with the rapidly curing plastics compound 27 directly by an injection unit 26, is inserted into the mutually aligned cavities 16 and 17. The outer end 25 of the hollow plug 22 is preferably constructed such that it can be covered by superimposed components, for example a blanking cap 37 or a handle 38 (shown in dot-dash lines).

As shown in Figure 2, the fixings at different strategic points between the roof module 1 and the side wall module 5 can have different dimensions in order to allow for the local conditions. In the illustrated section through the roof frame of a plastics motor vehicle body, the cavity 16' in the roof module 1 is relatively short while the cavity 17' in the side wall module 5 is kept larger. The corresponding hollow plug 22' is adapted accordingly.

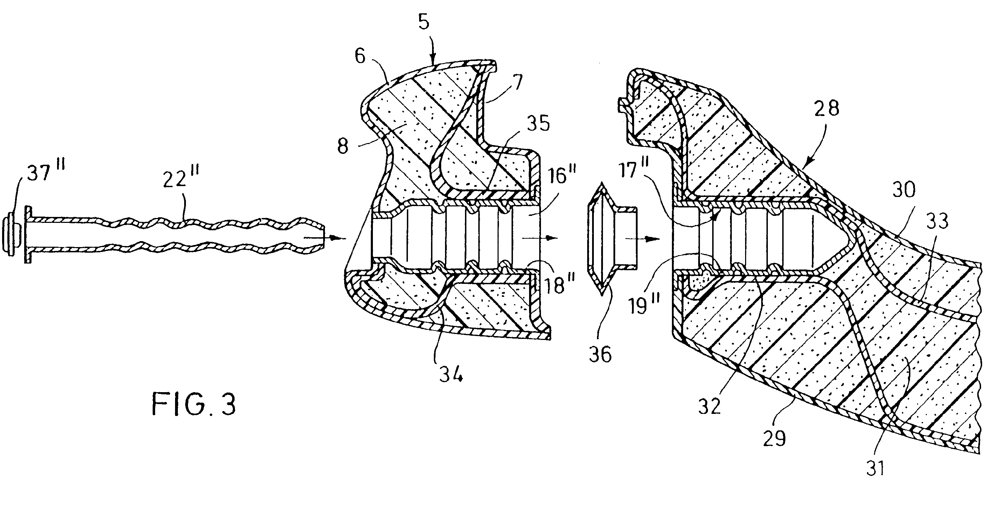

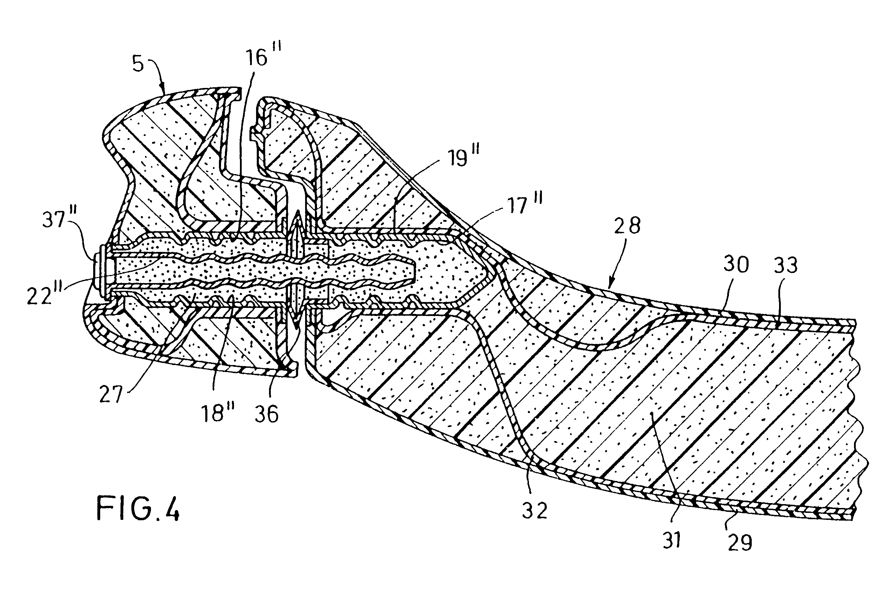

In the joint between a plastics floor pan module 28 and the door threshold region of the side wall module 5 shown in Figures 3 and 4, other advantageous developments of the invention can be seen.

The plastics floor pan module 28 is again constructed as a sandwich component having an external surface layer 29, an internal surface layer 30 and a core layer 31, reinforcing layers 32 and 33 being in this case added in other areas as required.

The plastics side wall module 5 still has an external surface layer 6, an internal surface layer 7 and a core layer 8 but is additionally provided with reinforcing layers 34 and 35.

The reinforcing layers 32 and 33 or 34 and 35 can be formed by corresponding reinforcing fabric inlays or by sheet metal inlays. The blind cavity 17'' constructed in the floor pan module 28 is formed in this case by an insert 19'' and the through cavity 16'' provided in the side wall module 5 is formed by a tubular insert 18''. The important feature of this arrangement, however, is that these tubular inserts 19'' and 18'' are appropriately surrounded and supported by the corresponding reinforcing layers 32 and 33 or 34 and 35.

A tubular plug 22'' of suitable length is provided to join together the two inserts. Between the regions of the two plastics body modules hich, under certain circumstances, may fail to lie completely on one another, there can be arranged an annular seal 36 which prevents an undesirable escape of the curable plastics material 27. The free end of the hollow plug 22'' can again be sealed by a blanking cap 37''.

As shown, in particular, in Figures 2 and 4, it is not absolutely essential for two plastics body modules which are to be joined together also to be joined over broad surface regions by a permanently elastic plastics jointing compound.

## Claims

1. A method of joining two components, such as body modules of a motor vehicle, characterised by the steps of
a) providing inserts recessed into the mating surface between the two components, the inserts being opposite one another when the components are in the position in which they are to be joined, there being in each pair of facing inserts a first insert having the form of a socket open at only one end and a second insert having the form of a sleeve open at both ends,
b) holding the components together in the position in which they are to be joined,
c) inserting into each pair of aligned inserts a hollow plug which is received with clearance in the two inserts, and
d) injecting a curable plastics material through the hollow plug into the space between the plug and the two inserts, the plastics material being injected from the same side of the modules as the plug is introduced into the aligned inserts.

2. A fixing for joining two components, such as plastics body modules of a motor vehicle, characterised by
a) two inserts (18,19) to be arranged opposite one another in the two components (1,5) along the mating surface between the two components, a first insert (19) having the form of a socket open at only one end and the second insert (18) having the form of a sleeve open at both ends, and
b) a hollow plug (22) having an inner end capable of being received with clearance in the two inserts (18,19), the outer end (25) of the hollow plug (22) being adapted for connection to a plastics material injection unit (26) to enable a curable plastics material to be injected through the hollow plug (22) into the space between the plug and the two inserts (18,19).

3. A fixing as claimed in claim 2, characterised in that walls of inserts (18,19) are provided with annular or thread-like grooves (20,21).

4. A fixing as claimed in claim 2 or 3, characterised in that the hollow plug (22) is provided with keying formations (23) on its walls.

5. A fixing as claimed in any one of claims 2 to 4, characterised in that the inserts (18,19) are integrally set into plastics body modules of a motor vehicle.

6. A fixing as claimed in claim 5, characterised in that the inserts (18'',19'') are surrounded by reinforcing layers (32 and 33 or 34 and 35) of the modules.

7. A fixing as claimed in any of claims 2 to 6, characterised in that an annular seal (36) is arranged between the inserts to prevent undesired escape of the injected plastics material.

8. A fixing as claimed in any of claims 2 to 7, characterised in that a blanking cap (37'') is provided for covering the outer end (25) of the hollow plug (22) after injection of the plastics material.

9. A method as claimed in claim 1, characterised in that the plastics material injected into the space between the plug and the two inserts is a multi-component thermosetting plastics material.

10. A method as claimed in claim 1, characterised in that the plastics material injected into the space between the plug and the two inserts consists of a fusible thermoplastic material.

## Patentansprüche

1. Verfahren zum Verbinden von zwei Bauteilen wie z.B. von Karosseriemodulen eines Kraftfahrzeuges,
gekennzeichnet durch die Schritte, wonach
a) in die zusammengehörigen Flächen zwischen den beiden Bauteilen eingelassene Einsatzhülsen vorgesehen werden, wobei sich diese Einsatzhülsen gegenüberliegen, wenn sich die Bauteile in der Stellung befinden, in der sie miteinander verbunden werden sollen, wobei jedes Paar sich gegenüberliegender Einsatzhülsen eine erste, nur an einem Ende offene steckbuchsenförmige Einsatzhülse aufweist sowie eine zweite, an beiden Enden offene buchsenförmige Einsatzhülse,
b) die Bauteile in derjenigen Stellung, in der sie miteinander verbunden werden sollen, zusammengehalten werden,
c) ein Hohldorn in jedes Paar fluchtender Einsatzhülsen eingeführt wird, der mit Spiel in den beiden Einsatzhülsen aufgenommen wird, und
d) eine aushärtbare Kunststoffmasse durch den Hohldorn hindurch in den Raum zwischen dem Dorn und den beiden Einsatzhülsen eingespritzt wird, wobei die Kunststoffmasse von derselben Seite der Module aus eingespritzt wird, von welcher auch der Dorn in die miteinander fluchtenden Einsatzhülsen eingeführt wird.

2. Befestigung zum Verbinden von zwei Bauteilen wie z.B. von Kunststoff-Karosseriemodulen eines Kraftfahrzeuges, gekennzeichnet durch
a) zwei Einsatzhülsen (18, 19), die einander gegenüberliegend entlang der zusammengehörigen Flächen zwischen den beiden Bauteilen in den beiden Bauteilen (1, 5) angeordnet sind, wobei eine erste Einsatzhülse (19) steckbuchsenförmig und nur an einem Ende offen ausgebildet ist, und eine zweite Einsatzhülse (18) buchsenförmig an beiden Enden offen ausgebildet ist.

3. Befestigung nach Anspruch 2, dadurch gekennzeichnet, daß die Wände der Einsatzhülsen (18, 19) mit ringförmigen oder gewindeartigen Nuten (20, 21) versehen sind.

4. Befestigung nach Anspruch 2 oder 3, dadurch gekennzeichnet, daß ein Hohldorn (22) an seinen Wänden mit Feder-und-Nut-Ausbildungen (23) versehen ist.

5. Befestigung nach einem beliebigen der Ansprüche 2 bis 4, dadurch gekennzeichnet, daß die Einsatzhülsen (18, 19) vollständig in die Kunststoff-Karosseriemodule eines Kraftfahrzeuges eingelassen sind.

6. Befestigung nach Anspruch 5, dadurch gekennzeichnet, daß die Einsatzhülsen (18'', 19'') von Verstärkungsschichten (32 und 33 oder 34 und 35) der Module umgeben sind.

7. Befestigung nach einem beliebigen der Ansprüche 2 bis 6, dadurch gekennzeichnet, daß eine Ringabdichtung (36) zwischen den beiden Einsatzhülsen angeordnet ist, um unerwünschtes Entweichen der eingespritzten Kunststoffmasse zu vermeiden.

8. Befestigung nach einem beliebigen der Ansprüche 2 bis 7, dadurch gekennzeichnet, daß eine Abschlußkappe (37'') zum Verschließen des äußeren Endes (25) des Hohldornes (22) nach dem Einspritzen der Kunststoffmasse vorgesehen ist.

9. Verfahren nach Anspruch 1, dadurch gekennzeichnet, daß die in den Raum zwischen dem Dorn und den beiden Einsatzhülsen eingespritzte Kunststoffmasse ein warm aushärtender Mehrkomponenten-Kunststoff ist.

10. Verfahren nach Anspruch 1, dadurch gekennzeichnet, daß die in den Raum zwischen dem Dorn und den beiden Einsatzhülsen eingespritzte Kunststoffmasse aus einem schmelzbaren thermoplastischen Kunststoff besteht.

## Revendications

1. Procédé permettant de joindre deux composants, tels que des modules de carrosserie d'un véhicule automobile, caractérisé par les étapes consistant
a) à placer des inserts en retrait dans la surface conjuguée comprise entre les deux composants, les inserts étant opposés l'un à l'autre lorsque les composants se trouvent dans la position dans laquelle ils doivent être assemblés, chaque paire d'inserts opposés comprenant un premier insert ayant la forme d'une fiche femelle ouverte à une extrémité seulement, et un second insert ayant la forme d'une douille ouverte aux deux extrémités,
b) à maintenir les composants ensemble, dans la position dans laquelle ils doivent être assemblés,
c) à insérer dans chaque paire d'inserts alignés un mandrin creux reçu avec jeu dans les deux inserts, et
d) à injecter une matière plastique pouvant durcir, à travers le mandrin creux, dans l'espace compris entre le mandrin et les deux inserts, la matière plastique étant injectée depuis le même côté des modules, par lequel le mandrin a été introduit dans les inserts alignés.

2. Fixation permettant de joindre deux composants, tels que des modules de carrosserie en plastique d'un véhicule automobile, caractérisée par
a) deux inserts (18, 19) disposés face à face dans les deux composants (1, 5), le long de la surface conjuguée comprise entre les deux composants, un premier insert (19) ayant la forme d'une fiche femelle ouverte à une extrémité, et le second insert (18) ayant la forme d'une douille ouverte aux deux extrémités.

3. Fixation selon la revendication 2, caractérisée en ce que les parois des inserts (18, 19) sont pourvues de rainures annulaires ou rainures en forme de filet (20, 21).

4. Fixation selon l'une des revendications 2 ou 3, caractérisée en ce que le mandrin creux (22) est pourvu, sur ses parois, de structures d'emboîtement géométrique (23).

5. Fixation selon l'une des revendications 2 à 4, caractérisée en ce que les inserts (18, 19) sont installés intégralement dans les modules de carrosserie en matière plastique d'un véhicule automobile.

6. Fixation selon la revendication 5, caractérisée en ce que les inserts (18'', 19'') sont entourés de couches (32 et 33 ou 34 et 35) de renforcement des modules.

7. Fixation selon l'une quelconque des revendications 2 à 6, caractérisée en ce qu'un joint annulaire (36) est agencé entre les inserts de manière à empêcher des bavures indésirables de la matière plastique injectée.

8. Fixation selon l'une quelconque des revendications 2 à 7, caractérisée en ce qu'un bouchon obturateur (37'') est prévu pour couvrir l'extrémité extrérieure (25) du mandrin creux (22) après l'injection de la matière plastique.

9. Procédé selon la revendication 1, caractérisé en ce que la matière plastique injectée dans l'espace compris entre le mandrin et les deux inserts est une matière plastique thermodurcissable à plusieurs constituants.

10. Procédé selon la revendication 1, caractérisé en ce que la matière plastique injectée dans l'espace compris entre le mandrin et les deux inserts est constituée par une matière thermoplastique fusible.
